Europäisches Patentamt

European Patent Office

Office européen des brevets

(19)

(11) **EP 0 611 516 B1**

(12) **EUROPÄISCHE PATENTSCHRIFT**

(45) Veröffentlichungstag und Bekanntmachung des Hinweises auf die Patenterteilung:
**18.06.1997   Patentblatt 1997/25**

(51) Int Cl.⁶: **H04S 1/00**, H04H 1/00, H04B 1/66, G11B 20/00

(21) Anmeldenummer: **92921326.2**

(22) Anmeldetag: **13.10.1992**

(86) Internationale Anmeldenummer:
**PCT/DE92/00869**

(87) Internationale Veröffentlichungsnummer:
**WO 93/09644 (13.05.1993 Gazette 1993/12)**

(54) **VERFAHREN ZUR REDUZIERUNG VON DATEN BEI DER ÜBERTRAGUNG UND/ODER SPEICHERUNG DIGITALER SIGNALE MEHRERER ABHÄNGIGER KANÄLE**

PROCESS FOR REDUCING DATA IN THE TRANSMISSION AND/OR STORAGE OF DIGITAL SIGNALS FROM SEVERAL DEPENDENT CHANNELS

PROCEDE DE REDUCTION DE DONNEES DANS LA TRANSMISSION ET/OU LA MISE EN MEMOIRE DE SIGNAUX NUMERIQUES DE PLUSIEURS CANAUX DEPENDANTS

(84) Benannte Vertragsstaaten:
**AT BE CH DE DK ES FR GB GR IT LI NL SE**

(30) Priorität: **08.11.1991   DE 4136825**

(43) Veröffentlichungstag der Anmeldung:
**24.08.1994   Patentblatt 1994/34**

(73) Patentinhaber: **FRAUNHOFER-GESELLSCHAFT ZUR FÖRDERUNG DER ANGEWANDTEN FORSCHUNG E.V.**
**80636 München (DE)**

(72) Erfinder:
 • **HERRE, Jürgen**
   **D-8520 Erlangen (DE)**
 • **SEITZER, Dieter**
   **D-8520 Erlangen (DE)**

(56) Entgegenhaltungen:
**WO-A-90/16136**

 • **ICASSP 91 Toronto, Ont., Canada, 14. Mai 1991, Band 5, Seiten 3601-3604, R.G. VAN DER WAAL et al. : 'Subband Coding of Stereophonic Digital Audio Signals'**
 • **ICASSP 89 ; Glasgow, Schottland 23. Mai 1989 ; Band 3, Seiten 1993-1996 J.D. JOHNSTON : 'Perceptual Transform Coding of Wideband Stereo Signals'**
 • **ICASSP 89; Glasgow, Schottland 23. Mai 1989; Band 3, Seiten 2009-2012 R.N.J. VELDHUIS et al. : 'Subband Coding of Digital Audio Signals Without Loss of Quality'**

**Beschreibung**

Technisches Gebiet

Die Erfindung bezieht sich auf ein Verfahren zur Reduzierung von Daten bei der Übertragung und/oder Speicherung digitaler Signale mehrerer abhängiger Kanäle gemäß dem Oberbegriff des Patentanspruchs 1 bzw. 8.

Verfahren, bei denen beispielsweise Audiosignale frequenzcodiert übertragen werden, sind beispielsweise aus den PCT-Veröffentlichungen WO 88/01811 und WO 89/08357 bekannt. Auf diese Druckschriften sei zur Erläuterung der hier nicht näher erklärten Begriffe ausdrücklich Bezug genommen.

Viele bekannte Verfahren zur datenreduzierten Codierung digitaler Audiosignale codieren die Signale im Frequenzbereich und benützen zur Übertragung der Signale aus dem Zeitbereich in den Frequenzbereich (in Spektralwerte) eine geeignete Abbildungstechnik z.B. eine "FFT", "DCT", "MDCT", "Polyphasenfilterbank" oder "Hybridfilterbank".

Mit diesen Verfahren ist ein hoher Grad an Ausnutzung von Signal-Redundanz und Irrelevanz bezüglich der Eigenschaften des menschlichen Ohres erreichbar.

Wenn bei der Übertragung von Signalen mehrerer Kanälen die Signale nicht unabhängig voneinander sind, ist eine zusätzliche Reduzierung der zu übertragenden Datenmenge möglich. Diese Voraussetzung ist beispielsweise bei Signalen in den Kanälen eines quadrophonen oder stereophonen Audiosignals erfüllt.

Stand der Technik

Ein Verfahren zur Ausnutzung der Redundanz/Irrelevanz zwischen den beiden Kanälen eines Stereo-Audiosignals ist in der Veröffentlichung von J.D. Johnston, "Perceptual Transform Coding of Wideband Stereo Signals", ICASSP 89, Glasgow, 23. Mai 1989, Band 3, S. 1993 - 1996 beschrieben. Bei dieser sogenannten MS-Codierung (Mitte/Seite-Codierung) wird anstatt dem linken und rechten Kanal die Summe (= Mitte) und die Differenz (= Seite) des Stereosignals codiert. Dadurch wird eine Einsparung bei der Menge der zu übertragenden Daten erreicht.

Die Abhängigkeit der Signale zweier Stereokanäle nutzt auch das aus der Veröffentlichung "Subband Coding of Stereophonie Digital Audio Signals", ICASSP 91, Toronto, 14. Mai 1991, Band 5, 5. 3601 bis 3604, bekannt gewordene Intensity-Stereoverfahren aus. Bei diesem Verfahren wird das Monosignal sowie eine zusätzliche Information über die Links/Rechtsverteilung des Signals übertragen.

Durch beide Verfahren können bei ungünstiger Signalzusammensetzung starke Störungen entstehen. Beispielsweise führt eine stark unterschiedliche Signalzusammensetzung im linken und im rechten Kanal bei der MS-Codierung zu Artefakten, die durch das tatsächlich im Kanal vorhandenem Signal nicht verdeckt werden. Deshalb erzeugt z.B. ein lautes Saxophon-Signal, das fast nur im rechten Kanal enthalten ist, auf dem linken Kanal Störungen, die nicht verdeckt werden und deshalb deutlich wahrnehmbar sind. Bei der Verwendung des Intensity-Stereoverfahrens wird das räumliche Klangbild zerstört, wenn linker und rechter Kanal stark unterschiedliche spektrale Zusammensetzung haben.

Die bekannten Verfahren sind somit nur einsetzbar, wenn keine ungünstige Signalzusammensetzung zu erwarten ist, oder wenn zugunsten der Reduzierung der Datenmenge Störungen in Kauf genommen werden.

Darstellung der Erfindung

Der Erfindung liegt die Aufgabe zugrunde, ein Verfahren zur Reduzierung von Daten bei der Übertragung und/ oder Speicherung digitaler Signale mehrerer abhängiger Kanäle bereitzustellen, bei welchen die Abhängigkeit der Signale in den verschiedenen Kanälen ausgenutzt wird und das zu keiner subjektiv wahrnehmbaren Störung der übertragenen Signale führt.

Erfindungsgemäße Lösungen dieser Augabe sind in den Ansprüchen 1 und 8 angegeben.

Erfindungsgemäß werden die Signale der verschiedenen Kanäle zunächst in Spektralbereiche überführt. Anschließend wird aus den Spektralwerten, die zu korrespondierenden Blöcken der Kanäle gehören, eine Größe bestimmt, die ein Maß für den spektralen Abstand zwischen den Signalen darstellt. Diese Größe ist um so kleiner, je ähnlicher sich die Spektralwerte der korrespondierenden Blöcke sind. Wenn diese Größe einen vorgebbaren Schwellwert unterschreitet, erfolgt die Codierung der Signale nicht mehr getrennt in den einzelnen Kanälen, sondern es wird eine gemeinsame Codierung vorgenommen.

Die gemeinsame Codierung erfolgt nach bekannten Verfahren, die zu einer Reduzierung der Menge der zu übertragenden Daten führt.

Bei Überschreiten des vorgebbaren Schwellwertes wird keine gemeinsame Codierung der Signale der verschiedenen Kanäle durchgeführt. Zugunsten der Qualität der übertragenen Daten wird damit vorübergehend auf die zusätzliche Datenreduktion verzichtet.

Weitere Ausgestaltungen und Weiterbildungen der Erfindung sind in den Unteransprüchen gekennzeichnet.

Nach Anspruch 2 werden nicht alle Spektralwerte, die zu einem Block gehören, zur Ermittlung des spektralen Abstandes verwendet. Vielmehr wird der spektrale Abstand aus Frequenzbereichsteilen bestimmt, so daß mehrere Werte des spektralen Abstandes pro Block ermittelt werden. Dieses Verfahren reagiert damit schneller auf Veränderungen des spektralen Abstandes.

Gemäß Anspruch 3 ist das erfindungsgemäße Verfahren besonders vorteilhaft auf Signale aus zwei akustischen Stereokanälen anwendbar. Für diesen Fall ist eine bevorzugte Vorschrift für die Bestimmung einer Größe angegeben, die ein Maß für den spektralen Abstand darstellt.

Wenn der auf die spektrale Energie normierte spektrale Abstand SD/SE unterhalb einer Schwellwertkonstante c liegt, ist gewährleistet, daß die spektrale Ähnlichkeit für eine gemeinsame Codierung der beiden Kanäle ausreichend ist. Dann sind die nach der Psychoakustik zu bestimmenden Maskierungsschwellen für beide Kanäle ebenfalls ähnlich genug, so daß Artefakte, die bei der gemeinsamen Codierung auftreten, in beiden Kanälen wirksam maskiert werden.

Eine alternative Regel zur Bestimmung des spektralen Abstandes ist in Anspruch 4 gekennzeichnet.

Die Schwellwertkonstante c ist empirisch zu bestimmen und liegt nach Anspruch 5 vorzugsweise zwischen 0,5 und 1.

Besonders vorteilhafte Ausgestaltungen der gemeinsamen Codierung sind in den Ansprüchen 6 und 7 angegeben. Nach Anspruch 6 erfolgt die gemeinsame Codierung durch eine an sich bekannte Mitte/Seite-Codierung. Dieses Verfahren ist vorzugsweise dann einzusetzen, wenn auf höchste Qualität bei niedrigen Bitraten Wert gelegt wird. Ein einfacheres Verfahren verwendet nach Anspruch 7 die Intensity-Stereo-Codierung.

In dem unabhängigen Anspruch 8 ist ein weiteres Verfahren gekennzeichnet, das die erfindungsgemäße Aufgabe löst.

Aus den Spektralwerten korrespondierender Frequenzbereichsteile der verschiedenen Kanäle werden Größen bestimmt, die ein Maß für die spektrale Energie dieser Frequenzbereichsteile darstellen.

Diese spektralen Energien der verschiedenen Kanäle werden mit der gesamten spektralen Energie aller Kanäle verglichen.

In den Kanälen, in denen in einem Frequenzbereichsteil die spektrale Energie unter einem vorgebbaren Bruchteil der gesamten spektralen Energie aller Kanäle in diesem Frequenzbereichsteil fällt, wird den entsprechenden Spektralwerten der Wert 0 zugeordnet. Dieses Verfahren ist dann von besonderem Vorteil, wenn die für die Übertragung verwendete Anzahl von Bits den zu übertragenden Spektralwerten angepaßt wird. Dann tritt die erwünschte Datenersparnis ein, da Nullen mit einer besonders niedrigen Bitzahl übertragen werden können.

Nach Anspruch 9 wird das Verfahren auf einzelne Spektralwerte angewendet. Damit können in einzelnen Kanälen extrem schmale Frequenzlinien, die ohnehin durch den psychoakustischen Effekt der Maskierung nicht wahrnehmbar wären, vor der Übertragung aus dem Gesamtspektrum herausgeschnitten werden.

Bei dem in Anspruch 10 gekennzeichneten Verfahren werden Signale aus zwei akustischen Kanälen übertragen, die durch Matrizierung aus Stereosignalen gebildet werden. Besonders effektiv arbeitet dieses Verfahren, wenn durch die Matrizierung nach Anspruch 11 eine Mitte/Seite-Codierung bewirkt wird. Bei der Mitte/Seite-Codierung treten insbesondere bei Stereo-Signalen, die sich durch eine hohe spektrale Ähnlichkeit der beiden Kanäle auszeichnen, unterschiedliche spektrale Energien im Mitte- und im Seite-Kanal auf. In diesem Fall können im Seite-Kanal kleine frequenzcodierte Werte durch Null ersetzt werden, ohne daß subjektiv wahrnehmbare Störungen auftreten. Das Verfahren ist jedoch auch für den Mitte-Kanal anwendbar, wenn der Seite-Kanal eine genügend hohe spektrale Energie gegenüber dem Mitte-Kanal aufweist.

Vorteilhafte Regeln zur Auswahl der Spektralwerte, die zu Null gesetzt werden, sind in den Ansprüchen 12 und 13 angegeben. Während nach Anspruch 12 jeweils einzelne Spektralwerte für die Ermittlung der spektralen Energien herangezogen werden, arbeitet das Verfahren nach Anspruch 13 mit Paaren von Spektralwerten. Dieses Verfahren ist vorteilhaft einsetzbar, wenn für die Übertragung eine zweidimensionale Codierung gewählt wird, bei der jeweils Paare von benachbarten Spektralwerten gemeinsam codiert werden. Selbstverständlich ist die angegebene Vorschrift auch auf mehrdimensionale Codierungsverfahren ausdehnbar.

Der Schwellwertfaktor k, der für die Auswahl der Spektralwerte, die zu Null gesetzt werden, maßgeblich ist, ist ein frei vorgebbarer Faktor, der empirisch optimiert wird.

Nach Anspruch 14 werden für unterschiedliche Frequenzbereiche unterschiedliche Schwellwertfaktoren bestimmt. Damit wird den Eigenschaften des menschlichen Gehörs besser Rechnung getragen.

Bei der Übertragung von digitalen Audiosignalen wird in der Regel ein psychoakustisches Modell zur Berechnung einer Maskierungsschwelle verwendet. Da die Maskierungsschwelle ein Maß dafür darstellt, welche Anteile eines akustischen Signals vom menschlichen Ohr wahrgenommen werden können, wird gemäß Anspruch 15 der Schwellwertfaktor aus der Maskierungsschwelle abgeleitet. Die Maskierungsschwelle ist eine zeitlich veränderliche Größe, der der Schwellwertfaktor laufend angepaßt wird. Mit diesem Verfahren kann eine optimale Datenreduzierung bezüglich der Datenminderung und der Wahrnehmbarkeit im decodierten Signal erzielt werden. Bei besonders kritischen Frequenzbereichen mit tonalen Komponenten erfolgt eine konservative Behandlung der frequenzcodierten Werte, während in unkritischen Bereichen Linien aus dem Spektrum entfernt werden.

Die wesentlichen Vorteile der Erfindung bestehen darin, daß ohne wesentliche Erhöhung der Komplexität des Übertragungsverfahrens eine zusätzliche Datenreduktion erreicht wird. Das erfindungsgemäße Verfahren ist unabhängig vom spezifischen Aufbau des verwendeten Codierungsverfahrens und ist dadurch vielseitig einsetzbar.

Das Verfahren bedarf lediglich einer zusätzlichen Signalbearbeitung in dem in geringen Stückzahlen benötigten Coder auf der Senderseite, jedoch nicht im Decoder, der in großen Stückzahlen von Endverbrauchern eingesetzt wird.

Kurze Beschreibung der Abbildungen

Ein Ausführungsbeispiel eines erfindungsgemäßen Verfahrens wird nachfolgend unter Bezugnahme auf die Zeichnungen näher erläutert.

Es zeigen:

Fig.: 1 Blockschaltbild eines erfindungsgemäßen Verfahrens

a) Codierung

b) Decodierung

Weg zur Ausführung der Erfindung

Die Zeitsignale eines linken Stereokanals L und eines rechten Stereokanals R werden in Analysefilterbänken 1a, 1b in den Frequenzbereich übergeführt. Hierzu stehen mehrere bekannte Verfahren wie "FFT", "DCT", "MDCT", "Polyphasenfilterbank", "Hybridfilterbank" etc. zur Verfügung.

Auf die in den Frequenzbereich übergeführten Signale wird eine Codiermatrix 2 angewendet, die eine gemeinsame Codierung der beiden Kanäle erlaubt. Im Ausführungsbeispiel wird die Mitte/Seite-Codierung angewendet.

In der nächsten Stufe 3 erfolgt die Datenverminderung durch Löschen bestimmter Frequenzbereiche. Im Seite-Kanal oder im Mitte-Kanal werden in Frequenzbereichen, in denen das Signal eine vergleichsweise geringe spektrale Energie aufweist, entsprechende Spektralwerte zu Null gesetzt.

Anschließend werden die Signale in einem zweikanaligen Audiodatencodierer 4, beispielsweise einem Entropiecodierer, codiert und mit Hilfe eines Multiplexers in einem Bitstrom übergeführt.

Zur Steuerung der Mitte/Seite-Codierung, der Löschung von Frequenzbereichen und der Audiodatencodierung werden die Eingangssignale einer weiteren Analyse unterzogen. Mit Hilfe eines psychoakustischen Modells wird in einer Stufe 6 die Maskierungsschwelle berechnet, die ausschlaggebend für die Audiodatencodierung 4 ist. Aus der Maskierungsschwelle wird auch ein Schwellwertfaktor als Bedingung dafür abgeleitet, welche Spektralwerte in welchen Frequenzbereichen in der Stufe 3 zu Null gesetzt werden.

In der Stufe 5 wird anhand des spektralen Abstandes der Signale in den beiden Kanälen bestimmt, ob die für einen gewählten Signalabschnitt durch Anwendung der Codiermatrix 2 eine Mitte/Seite-Codierung erfolgen soll. Wenn in dem gewählten Signalabschnitt die spektrale Ähnlichkeit der Daten zu gering ist, erfolgt in 2 keine Mitte/Seite-Codierung, vielmehr werden die beiden Kanäle getrennt codiert.

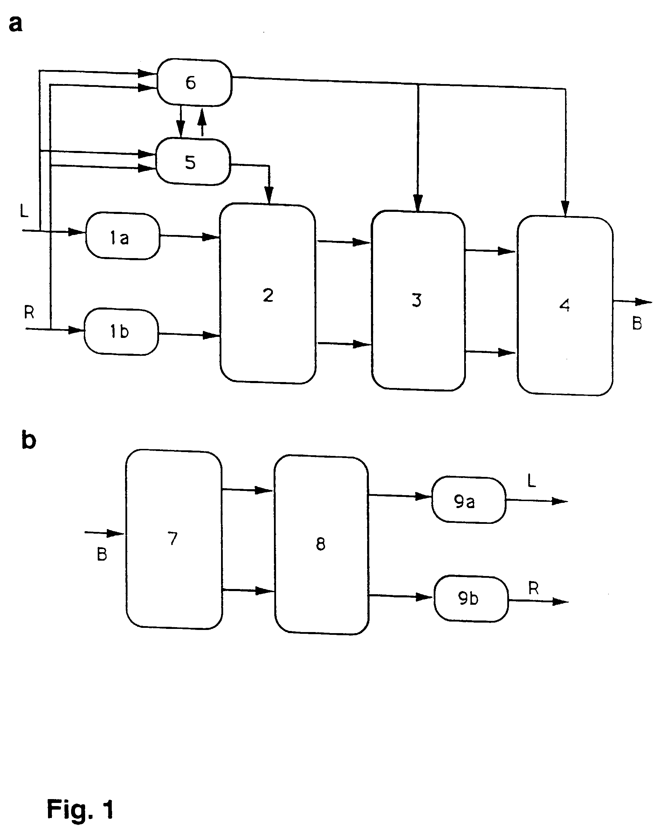

Der im Coder gebildete Bitstrom wird auf den Decoder übertragen, dessen Aufbau in Figur 1b dargestellt ist.

Im Decoder wird in Stufe 7 der Bitstrom decodiert und anschließend werden in Stufe 8 aus den mitte/seite-codierten Signalen die Signale des linken und des rechten Kanals gebildet, die in den Synthesefilterbänken 9a, 9b aus dem Frequenzbereich in den Zeitbereich zurückübertragen werden.

**Patentansprüche**

1.  Verfahren zur Reduzierung von Daten bei der Übertragung und/oder Speicherung digitaler Signale aus N voneinander abhängigen Kanälen, bei welchem Abtastwerte von Signalen aus dem Zeitbereich blockweise in den Frequenzbereich, d.h. in Spektralwerte, überführt werden, die Spektralwerte codiert, übertragen und/oder gespeichert, decodiert und in N Kanäle im Zeitbereich zurückübertragen werden,
    **dadurch gekennzeichnet,**
    daß aus den Spektralwerten korrespondierender Blöcke der verschiedenen Kanäle eine Größe, die ein Maß für den spektralen Abstand zwischen den Signalen der verschiedenen Kanäle darstellt, bestimmt und mit einem vorgebbaren Schwellwert verglichen wird und daß bei Unterschreiten des Schwellwertes eine gemeinsame Codierung der Signale aus verschiedenen Kanälen erfolgt.

2.  Verfahren nach Anspruch 1,
    **dadurch gekennzeichnet,**
    daß der spektrale Abstand zwischen den Signalen unterschiedlicher Kanäle aus korrespondierenden Frequenz-

EP 0 611 516 B1

bereichsteilen der Signale bestimmt wird.

3. Verfahren nach Anspruch 1 oder 2,
   **dadurch gekennzeichnet,**
   daß Signale aus zwei akustischen Stereokanälen übertragen werden und daß die Bedingung für gemeinsame Codierung der Signale durch folgende Regel beschrieben wird,

$$SD/SE < c,$$

wobei SD ein Maß für den spektralen Abstand zwischen den Signalen aus dem rechten und dem linken Stereokanal darstellt und nach folgender Vorschrift gebildet wird,

$$SD = \sum_{i=f1}^{f2-1} \left| \left| L_i / LR\_RATIO \right|^n - \left| R_i \right|^n \right|$$

wobei $L_i$ bzw. $R_i$ die mit der Blocklänge IBLEN frequenzcodierten Koeffizienten des linken bzw. rechten Stereokanals, n eine frei wählbare Norm und f1 und f2 die Indexgrenzen des betrachteten Frequenzintervalls sind, die Größe LR_RATIO das Verhältnis der Signalgrößen von linkem zu rechtem Kanal beschreibt und SE die spektrale Energie des Stereosignals darstellt und nach folgender Vorschrift gebildet wird,

$$SE = \sum_{i=f1}^{f2-1} \left| \left| L_i \right|^n + \left| R_i \right|^n \right|$$

und c eine vorgebbare Schwellwertkonstante mit $0<c<1$ ist.

4. Verfahren nach Anspruch 3,
   **dadurch gekennzeichnet,**
   daß das Maß für den spektralen Abstand SD nach folgender Vorschrift gebildet wird,

$$SD = \sum_{i=f1}^{f2-1} \left| \left( \left| L_i / LR\_RATIO \right| - \left| R_i \right| \right) \right|^n$$

5. Verfahren nach einem der Ansprüche 3 oder 4,
   **dadurch gekennzeichnet,**
   daß die Schwellwertkonstante c zwischen 0,5 und 1 gewählt wird.

6. Verfahren nach einem der Ansprüche 3 bis 5,
   **dadurch gekennzeichnet,**
   daß die gemeinsame Codierung durch eine Mitte/Seite-Codierung erfolgt und die Größe LR_RATIO: =1 gesetzt wird.

7. Verfahren nach einem der Ansprüche 3 bis 5,
   **dadurch gekennzeichnet,**
   daß die gemeinsame Codierung durch eine Intensity-Stereo-Codierung erfolgt und für die Größe LR_RATIO gilt:

5

$$LR\_RATIO = \sqrt[n]{\dfrac{\sum\limits_{i=f1}^{f2-1} |L_i|^n}{\sum\limits_{i=f1}^{f2-1} |R_i|^n}}$$

8. Verfahren nach dem Oberbegriff des Anspruchs 1,
**dadurch gekennzeichnet,**
daß aus den Spektralwerten korrespondierender Frequenzbereichsteile der verschiedenen Kanäle Größen bestimmt werden, die ein Maß für die spektrale Energie dieser Frequenzbereichsteile darstellen, daß diese Größen der verschiedenen Kanäle mit der spektralen Energie aller Kanäle in diesen Frequenzbereichsteilen verglichen werden und daß in Frequenzbereichsteilen, in denen die spektrale Energie in einzelnen Kanälen unter einen vorgebbaren Bruchteil der Gesamtenergie aller Kanäle fällt, die entsprechenden Spektralwerte der Frequenzbereichsteile zu Null gesetzt werden.

9. Verfahren nach Anspruch 8,
**dadurch gekennzeichnet,**
daß zur Bestimmung der spektralen Energie einzelne Spektralwerte aus den verschiedenen Kanälen verwendet werden.

10. Verfahren nach Anspruch 8,
**dadurch gekennzeichnet,**
daß Signale aus zwei akustischen Kanälen übertragen werden, die durch Matrizierung aus den Signalen eines linken und eines rechten Kanals eines Stereosignals gebildet werden.

11. Verfahren nach Anspruch 10,
**dadurch gekennzeichnet,**
daß die Matrizierung eine Mitte/Seite-Codierung ist.

12. Verfahren nach Anspruch 11,
**dadurch gekennzeichnet,**
daß Spektralwerte $S_i$ im Differenzkanal ($S_i = L_i - R_i$) oder im Summenkanal ($S_i = L_i + R_i$) nach folgender Vorschrift durch den Wert Null ersetzt werden,
wenn

$$|S_i|^n < k * (|L_i|^n + |R_i|^n),$$

dann gilt $S_i := 0$
wobei $L_i$ bzw. $R_i$ die mit der Blocklänge IBLEN frequenzcodierten Koeffizienten des linken bzw. rechten Stereokanals, n eine frei wählbare Norm und k ein geeignet gewählter Schwellwertfaktor ist und i von 0 bis zur Blocklänge IBLEN (ausschließlich) läuft.

13. Verfahren nach einem der Ansprüche 8 bis 11,
**dadurch gekennzeichnet,**
daß zur Bestimmung der spektralen Energie Paare von Abtastwerten verwendet werden und die Spektralwerte $S_{2i}$ und $S_{2i+1}$ im Differenzkanal oder im Summenkanal nach folgender Vorschrift durch den Wert Null ersetzt werden,
wenn

$$\left| S_{2i}{}^n + S_{2i+1}{}^n \right| < k * (|L_{2i}|^n + |R_{2i}|^n + |L_{2i+1}|^n + |R_{2i+1}|^n),$$

dann gilt $S_{2i} := 0$ und $S_{2i+1} := 0$,

wobei der index i von Null bis zur halben Blocklänge IBLEN (ausschließlich) läuft.

14. Verfahren nach einem der Ansprüche 12 oder 13,
    **dadurch gekennzeichnet,**
    daß der Schwellwertfaktor k in unterschiedlichen Frequenzbereichen unterschiedlich gewählt wird.

15. Verfahren nach einem der Ansprüche 12 bis 14,
    **dadurch gekennzeichnet,**
    daß bei der Codierung der Spektralwerte ein psychoakustisches Modell zur Berechnung einer Maskierungsschwelle verwendet wird und der Schwellwertfaktor k adaptiv aus dieser Maskierungsschwelle abgeleitet wird.

## Claims

1. A method of reducing data in the transmission and/or storage of digital signals from N channels dependent on one another, in which sampled values from signals in the time domain are transformed in blocks into the frequency domain, i.e. into spectral values, the spectral values are coded, transmitted and/or stored, decoded and transformed back into N channels in the time domain, characterized in that a value is determined from the spectral values of corresponding blocks of the different channels, being a measure of the spectral distance between the signals of the different channels, and is compared with a predetermined threshold value, and in that, on falling below the threshold, a common coding of the signals from different channels is effected.

2. A method according to claim 1, characterized in that the spectral distance between the signals of different channels is determined from corresponding frequency range segments of the signals.

3. A method according to claim 1 or 2, characterized in that signals from two acoustic stereo channels are transmitted and in that the condition for common coding of the signals is given by the following rule

$$SD/SE < c,$$

where SD is a measure of the spectral distance between the signals from the right and left stereo channels and is formed according to the following equation,

$$SD = \sum_{i=f1}^{f2-1} \left| |L_i/LR\_RATIO|^n - |R_i|^n \right|$$

where $L_i$ and $R_i$ are the coefficients of the left and right stereo channels respectively frequency coded with the block lengths IBLEN, n is a freely selectable standard value and f1 and f2 are the index limits of the frequency interval considered, the value LR_RATIO gives the ratio of the signal magnitudes of the left to the right channel and SE represents the spectral energy of the stereo signal and is formed according to the following equation,

$$SE = \sum_{i=f1}^{f2-1} \left| |L_i|^n + |R_i|^n \right|$$

and c is a predetermined threshold constant, $0<c<1$.

4. A method according to claim 3, characterized in that the measure for the spectral distance SD is formed according to the following equation,

$$SD = \sum_{i=f1}^{f2-1} \left| \left( |L_i/LR\_RATIO| - |R_i| \right) \right|^n$$

5. A method according to claim 3 or 4, characterized in that the threshold constant c is chosen between 0.5 and 1.

6. A method according to any of claims 3 to 5, characterized in that the common coding is effected by a centre/side coding and the value LR_RATIO := 1 is assigned.

7. A method according to any of claims 3 to 5, characterized in that the common coding is effected by an intensity-stereo coding and the following applies for the value of the ratio LR_RATIO:

$$LR\_RATIO = \sqrt[n]{\frac{\sum_{i=f1}^{f2-1} -|L_i|^n}{\sum_{i=f1}^{f2-1} |R_i|^n}}$$

8. A method according to the pre-characterizing part of claim 1, characterized in that values are determined from the spectral values of corresponding frequency range segments of the different channels, which values represent a measure of the spectral energy of these frequency range segments, in that these values of the different channels are compared with the spectral energy of all channels in these frequency range segments and in that, in frequency range segments in which the spectral energy in individual channels falls below a predetermined fraction of the total energy of all channels, the corresponding spectral value of the frequency range segment is set to zero.

9. A method according to claim 8, characterized in that individual spectral values from the different channels are used to determine the spectral energy.

10. A method according to claim 8, characterized in that signals from two acoustic channels are transmitted, which are formed by matrixing the signals of a left and a right channel of a stereo signal.

11. A method according to claim 10, characterized in that the matrixing is a centre/side coding.

12. A method according to claim 11, characterized in that spectral values $S_i$ in the difference channel ($S_i = L_i - R_i$) or in the sum channel ($S_i = L_i + R_i$) are replaced by the value zero according to the following condition, if

$$|S_i|^n < k * (|L_i|^n + |R_i|^n),$$

then $S_i := 0$ applies
where $L_i$ and $R_i$ are the coefficients of the left and right stereo channels respectively frequency coded with the block lengths IBLEN, n is a freely selectable standard value and k is a suitably selected threshold factor and i runs from 0 to the block length IBLEN (exclusive).

13. A method according to any of claims 8 to 11, characterized in that, in order to determine the spectral energy, pairs of sampled values are employed and the spectral values $S_{2i}$ and $S_{2i+1}$ in the difference channel or in the sum channel are replaced by the value zero in accordance with the following condition, if

$$\left|S_{2i}^n + S_{2i+1}^n\right| < k * (|L_{2i}|^n + |R_{2i}|^n + |L_{2i+1}|^n + |R_{2i+1}|^n),$$

then $S_{2i} := 0$ and $S_{2i+1} := 0$ applies,
where the index i runs from zero to half the block length IBLEN (exclusive).

14. A method according to claim 12 or 13, characterized in that the threshold factor k is chosen differently in different frequency regions.

15. A method according to any of claims 12 to 14, characterized in that a psycho-acoustic model is used in the coding of the spectral values for computing a masking threshold and the threshold factor k is derived adaptively from this masking threshold.

**Revendications**

1. Procédé pour réduire des données lors de la transmission et/ou de la mise en mémoire de signaux numériques à partir de N canaux dépendants les uns des autres, grâce auxquels on transfère des valeurs de balayage de signaux de la plage de temps par blocs dans la plage de fréquence, c'est-à-dire dans les valeurs spectrales codées, transmises et/ou décodées et retransmises dans N canaux dans la plage de temps,
caractérisé en ce que

   - à partir de blocs des différents canaux qui correspondent aux valeurs spectrales on détermine une grandeur, qui constitue une mesure de l'écartement spectral entre les signaux des différents canaux et on la compare à une valeur de seuil que l'on peut définir au préalable et
   - quand la valeur de seuil est sous-dépassée un codage commun des signaux provenant de différents canaux a lieu.

2. Procédé selon la revendication 1,
caractérisé en ce que
l'écartement spectral entre les signaux des différents canaux est déterminé à partir de plages partielles de fréquence correspondantes des signaux.

3. Procédé selon la revendication 1 ou 2,
caractérisé en ce que

   - l'on transmet des signaux provenant de deux canaux stéréo acoustiques et
   - la condition pour un codage commun des signaux est décrite par la règle suivante :

$$SD/SE < c$$

formule dans laquelle SD constitue une mesure de l'écartement spectral entre les signaux provenant du canal stéréo de droite et du canal stéréo de gauche et est formé d'après la formule suivante :

$$SD = \sum_{i=f1}^{f2-1} \left| \left| L_i \ / \ LR\_RATIO \right|^n - \left| R_i \right|^n \right|$$

formule dans laquelle $L_i$ ou $R_i$ sont les coefficients à fréquence codée, avec la longueur de bloc IBLEN, du canal stéréo de gauche ou du canal stéréo de droite, n est une norme que l'on peut choisir librement et f1 et f2 sont les limites d'indice de l'intervalle de fréquence considéré, la grandeur LR_RATIO décrit le rapport entre les grandeurs des signaux du canal de gauche et du canal de droite et SE est l'énergie spectrale du signal stéréo et est formée selon la formule suivante :

$$SE = \sum_{i=f1}^{f2-1} \left| \left| L_i \right|^n - \left| R_i \right|^n \right|$$

et c est une constante de valeur de seuil que l'on peut définir au préalable avec $0 < c < 1$.

4. Procédé selon la revendication 3,
caractérisé en ce que
la mesure de l'écartement spectral SD est formée selon la formule suivante :

$$SD = \sum_{i=f1}^{f2-1} \left| \left( \left|L_i \; / \; LR\_RATIO\right| - \left|R_i\right| \right) \right|^n .$$

**5.** Procédé selon l'une des revendications 3 ou 4,
caractérisé en ce que
l'on choisit la constante c de valeur de seuil entre 0,5 et 1.

**6.** Procédé selon l'une des revendications 3 à 5,
caractérisé en ce que
le codage commun a lieu par un codage milieu-côté et on rend la grandeur LR_RATIO égale à 1.

**7.** Procédé selon l'une des revendications 3 à 5,
caractérisé en ce que
le codage commun a lieu par un codage stéréo d'intensité et vaut pour la grandeur LR_RATIO :

$$LR\_RATIO = \sqrt[n]{\frac{\sum_{i=f1}^{f2-1} -\left|L_i\right|^n}{\sum_{i=f1}^{f2-1} \left|R_i\right|^n}}$$

**8.** Procédé selon le préambule de la revendication 1,
caractérisé en ce qu'

- à partir des plages partielles de fréquence des différents canaux qui correspondent aux valeurs spectrales, on détermine des grandeurs qui constituent une mesure de l'énergie spectrale de cette plage partielle de fréquence,
- ces grandeurs des différents canaux sont comparées à l'énergie spectrale de tous les canaux dans ces plages partielles de fréquence et
- dans les plages partielles de fréquence, dans lesquelles l'énergie spectrale tombe dans différents canaux en dessous d'une fraction de l'énergie totale de tous les canaux que l'on peut définir au préalable, on met à zéro les valeurs spectrales correspondantes des plages partielles de fréquence.

**9.** Procédé selon la revendication 8,
caractérisé en ce que
pour déterminer l'énergie spectrale, on utilise différentes valeurs spectrales à partir de différents canaux.

**10.** Procédé selon la revendication 8,
caractérisé en ce que
des signaux sont transmis à partir de deux canaux acoustiques, qui sont formés par matriçage à partir des signaux d'un canal de gauche et d'un canal de droite d'un signal stéréo.

**11.** Procédé selon la revendication 10,
caractérisé en ce que
le matriçage est un codage milieu/côté.

**12.** Procédé selon la revendication 11,
caractérisé en ce que
l'on remplace des valeurs spectrales Si dans le canal différentiel ($S_i = L_i - R_i$) ou dans le canal de sommation ($S_i = L_i + R_i$) selon la formule suivante par la valeur zéro,
quand

**EP 0 611 516 B1**

$$\left|S_i\right|^n < k * \left(\left|L_i\right|^n + \left|R_i\right|^n\right)$$

on a alors : $S_i := 0$

dans cette formule $L_i$ ou $R_i$ sont les coefficients à fréquence codée, avec la longueur de bloc IBLEN, du canal stéréo de gauche ou du canal stéréo de droite, n est une norme que l'on peut choisir librement, et k est un facteur de valeur de seuil choisi de façon appropriée, et i va de zéro jusqu'à la longueur de bloc IBLEN (exclusivement).

13. Procédé selon l'une des revendications 8 à 11,
caractérisé en ce que
pour déterminer l'énergie spectrale, on utilise des paires de valeurs de balayage et les valeurs spectrales $S_{2i}$ et $S_{2i+1}$ sont remplacées dans le canal différentiel ou dans le canal d'addition selon la formule suivante par la valeur zéro :
quand

$$\left|S_{2i}{}^n + S_{2i+1}{}^n\right| < k * \left(\left|L_{2i}\right|^n + \left|R_{2i}\right|^n + \left|L_{2i+1}\right|^n + \left|R_{2i+1}\right|^n\right)$$

alors on a $S_{2i} := 0$ et $S_{2i+1} := 0$
formule dans laquelle l'indice i va de zéro jusqu'à la moitié de la longueur de bloc IBLEN (exclusivement).

14. Procédé selon l'une des revendications 12 ou 13,
caractérisé en ce que
le facteur de valeur de seuil k dans des plages de fréquence différentes est choisi de façon différente.

15. Procédé selon l'une des revendications 12 à 14,
caractérisé en ce que
lors du codage des valeurs spectrales, on utilise un modèle psycho-acoustique pour calculer un seuil de masquage et le facteur de valeur de seuil k est dérivé de façon adaptable de cette valeur de seuil de masquage.

**a**

**b**

**Fig. 1**